# EUROPEAN PATENT APPLICATION

(11) **EP 2 743 827 A1**
(43) Date of publication of application: **18.06.2014**
(21) Application number: 12824277.3
(22) Date of filing: 15.06.2012
(51) Int. Cl.: G06F 9/445, H04L 29/06

(54) **SOFTWARE UPGRADING SYSTEM AND METHOD, AND SERVER AND CLIENT**

(30) Priority: 18.08.2011 CN 201110237961
(71) Applicant: Tencent Technology (Shenzhen) Co., Ltd, Guangdong 518044 (CN)
(72) Inventor: LIU, Gang, Shenzhen Guangdong 518044 (CN); WANG, Fuchen, Shenzhen Guangdong 518044 (CN)
(74) Representative: Manitz, Finsterwald & Partner GbR
(86) International application number: PCT/CN2012/076984
(87) International publication number: WO 2013/023481

(57) **Abstract**

The present disclosure relates to a system and method for updating software, a server and a client. The method includes: a client reporting an updating request and initiating an authentication request; the client obtaining first verification content from an updating server according to the authentication request; the updating server comparing the first verification content sent from the client with second verification content which is stored in the updating server, and returning succeed information to the client after a passed authentication; the updating server generating configuration information according to the updating request, and adding a digital signature on the configuration information before sending the configuration information with the digital signature to the client; the client carrying signature verification on the configuration information, and downloading an updating data package from the updating server after the signature verification is passed. Through the bidirectional identification, the security of the software updating is improved.

## Description

### FIELD OF THE INVENTION

The present disclosure relates generally to the field of the updating software technology, and more particularly, to a system and method for updating software, and server and client thereof.

### BACKGROUND OF THE INVENTION

Conventional network architecture C/S (Client/Server) separates the clients from the servers. The client software could send request to the server or the application server. Due to the large scale of usage of the C/S architecture, the upgrade of the client functions are usually done through updating software in the clients.

Software updating means while the programmers are programming the software, due to the incomplete consideration of the programmers or the imperfection of the functions, whereas after the software is published, service packages or patches are distributed through modifying the program or adding new functions thereinto. The update of the software could be thereby done through installing the patches. The software updating is used for better meeting users' demands or preventing virus from invading. Software updating includes two ways; one is manual updating while the other is compulsory updating. Manual updating means that after a new revision of the software is released, the client autonomously checks if there is any new updated revision, and reminds the user whether it is needed to update. Compulsory updating means that service providers lead large scales of updating according to revision distribution on the clients and the quality situation of the new revision or fixing emergent bugs. For lowering the impact to the minimum, it is required for the client to enable the compulsory updating in the first time, due to the new bugs are found after the software is published, thereby preventing the impact to be expanded through the pervasion of the software. Software updating is only applicable for valid clients.

Typical process for updating software is that: obtaining the users' active updating request at the initiation or startup of the software; sending the local revision information such as the software configuration to the server to lookup for updating information; and receiving from the server related updating configuration; downloading and verifying updating packages or patches according to the updating configuration.

According to the fast development and iteration, revision update and loophole repair is getting more frequent. During the updating process, the address for the update downloading may be hijacked, which is DNS (Domain Name System) hijacking meaning blocking the request for domain name resolution within the hijacked network area, analyzing the requested domain name, release the request that are out of the censorship; or return a fake IP (Internet Protocol) address or do nothing so as to lose response to the request; wherein the result is that for particular requests it would be unable to visit or the visit is led to a phoney site, which might cause the client is attacked during the software updating due to the insecure identification of the server, thereby the security level is low in the software updating.

### SUMMARY OF THE INVENTION

Accordingly, it is necessary to provide a system for updating software which could improve the security for software updating.

A system for updating software including a client and an updating server, the client is used for reporting an updating request to the updating server, the updating server is used for generating configuration information according to the updating request; wherein the client is further used for initiating an authentication request and obtaining first verification content from the updating server; the updating server is used for comparing the first verification content with second verification content that is stored in the updating server for the authentication and returning succeed information to the client after a passed authentication; the updating server is further used for adding a digital signature on the configuration information; and sending the configuration information with the digital signature to the client; the client is further used for carrying signature verification on the configuration information, and downloading an updating data package from the updating server.

Preferably, the client is further used for getting command scripts from the updating server after the authentication request is initiated, and executing the command scripts to obtain the first verification content.

Preferably, the client is further used for storing the returned succeed information, and not reporting local information to the updating server for the authentication if the succeed information is detected to exist at a start next time; or reporting the local information to the updating server if the succeed information is detected not to exist; the updating server is used for verifying the local information, and for sending configuration information with digital signature to the client after adding digital signature on the configuration information at a success verification thereof.

Preferably, the system further includes a statistic server and an updating configuration server; the statistic server is used for receiving results for the downloading of the updating data package that is reported by the client, and for generating statistic data accordingly; the updating configuration server is used for synchronizing the statistic data of the statistic server, and modifying configuration for an amount of updating according to the statistic data.

Preferably, the updating server adds the digital signature on the configuration information through encryption the configuration information using a private key; the client decrypts the configuration information through a public key before carrying the signature verification.

Besides, it is necessary to provide a method for updating software which could improve the security for software updating.

A method for updating software including:
a client reporting an updating request and initiating an authentication request;
the client obtaining first verification content from an updating server according to the authentication request; the updating server comparing the first verification content sent from the client with second verification content which is stored in the updating server, and returning succeed information to the client after a passed authentication;
the updating server generating configuration information according to the updating request, and adding a digital signature on the configuration information before sending the configuration information with the digital signature to the client;
the client carrying signature verification on the configuration information, and downloading an updating data package from the updating server after the signature verification is passed.

Preferably, the method further includes:
the client getting command scripts from the updating server after the authentication request is initiated; the client executing the command scripts to obtain the first verification content.

Preferably, the method further includes: the client storing the succeed information;
at a start next time, detecting whether the succeed information exists; the client not reporting local information for the authentication if the succeed information exists; or the client reporting the local information to the updating server if the succeed information does not exist; the updating server verifying the local information, and sending configuration information with digital signature to the client after adding digital signature on the configuration information on a success verification thereof; or otherwise ends up if the verification of the local information fails.

Preferably, the method further includes:
a statistic server receiving results for the downloading of the updating data package that is reported from the client, and generating statistic data accordingly;
an updating configuration server synchronizing the statistic data, and modifying configuration for an amount of updating according to the statistic data.

Preferably, the step of adding digital signature on the configuration information is that the updating server adds the digital signature on the configuration information through encryption the configuration information using a private key; wherein before the signature verification includes: decrypting the configuration information through a public key.

Besides, it is necessary to provide a server, wherein the server includes:
a network interface for communicating with clients that request for updating, and obtaining updating requests and authentication requests that are reported from the clients;
a processor for communicating with the network interface; and
a memory for communicating with the process and storing data and machine instructions; the processor is for calling the machine instructions for performing multiple operations; the multiple operations include:
generating configuration information according to the updating request; sending to the client first verification content according to the authentication request, and comparing the first verification content with stored second verification content for authentication, and return succeed information to the client after a passed authentication;
adding a digital signature on the configuration information before sending the configuration information with the digital signature to the client; after the client carrying signature verification on the configuration information the signature verification is passed, providing the client with updating data package.

Preferably, the multiple operations further include:
verifying the local information, and for sending configuration information with digital signature to the client after adding digital signature on the configuration information at a success verification thereof.

Preferably, the multiple operations further include:
receiving results for the downloading of the updating data package that is reported by the client, and generating statistic data accordingly;
synchronizing the statistic data, and modifying configuration for an amount of updating according to the statistic data.

Preferably, adding digital signature on the configuration information is that adding the digital signature on the configuration information through encryption the configuration information using a private key.

Besides, it is necessary to provide a client, wherein the client includes:
a network interface for providing communication with an updating server, and reporting an updating request to the updating server, and initiating an authentication request;
a processor for communicating with the network interface; and
a memory for communicating with the process, and for storing data and machine instructions, the processor is for calling the machine instructions for performing multiple operations; the multiple operations include:
   obtaining first verification content from the updating server according to the authentication request; obtaining succeed information after an authentication through comparison between the first verification content and second verification content which is stored in the server is passed;
   obtaining configuration information that the server generates and adds digital signature according to the updating request, and carrying signature verification on the configuration information and downloading an updating data package from the updating server after the signature verification is passed.

Preferably, the multiple operations further include:
getting command scripts from the updating server after the authentication request is initiated, and executing the command scripts to obtain the first verification content.

Preferably, the multiple operations further include:
storing the succeed information; at a start next time, not reporting local information to the server for authentication if the succeed information exists, or reporting the local information to the server if the succeed information does not exist.

Preferably, the multiple operations further include:
decrypting the configuration information through a public key before carrying the signature verification.

According to the above system and method for updating software, the server and client, the client initiates an authentication request and obtaining first verification content according to the authentication request; the updating server compare the first verification content with the stored second verification content, and returns succeed information to the client after the authentication is passed; which enables the server to perform identification on the identity of the client. The updating server generates the configuration information according to the updating request, and adds digital signature on the configuration information to be distributed to the client. The client carries signature verification on the configuration information and downloads the updating data package after the verification is passed, which ensures the configuration information of the updating server to be valid, and enables the client to perform identification on the identity of the server. Through the bidirectional identification, the security of the software updating is improved.

### BRIEF DESCRIPTION OF THE DRAWINGS

Fig. 1 is a block diagram of a system for updating software according to an embodiment;
Fig. 2 is a block diagram of a system for updating software according to another embodiment;
Fig. 3 is a flow diagram of a method for updating software according to an embodiment;
Fig. 4 is a flow diagram of a method for updating software according to another embodiment;
Fig. 5 is a block diagram of an updating server according to an embodiment;
Fig. 6 is a block diagram of a client according to an embodiment.

### DESCRIPTION OF THE PREFERRED EMBODIMENTS

Detailed description of the system and method for updating software would be described hereinafter with reference to the embodiments and the accompanying figures.

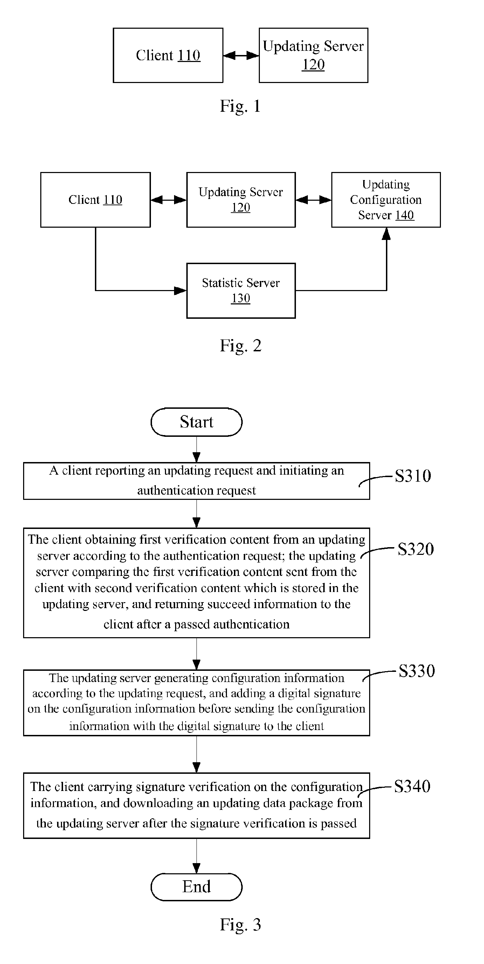

Referring to Fig. 1, according to one of the embodiments, a system for updating software includes a client 110 and an updating server 120.

The client 110 is used for reporting an updating request to the updating server 120. For ensuring the validity of the client 110, the updating server 120 shall verify the identification of the client 110. The client 110 is also used for initiating an authentication request, and obtaining first verification content from the updating server 120. The updating server 120 is used for comparing the first verification content with second verification content that is stored in the updating server for the authentication. After a passed authentication, succeed information would be returned to the client 110.

The client 110 is also used for getting command scripts from the updating server 120 after the authentication request is initiated. The command scripts are executed to obtain the first verification content, and the first verification content is sent to the updating server 120. Wherein, the command script is returned from the updating server 120, which includes definitions of the operations that require the client 110 to execute, for example requiring the client 110 to send an offset of specific position of a file to the updating server 120, etc. The first verification content could be an offset of a specific position of a file.

The updating server 120 could compare the first verification content with the second verification content through calculating and comparing an MD5 value thereof, if the MD5 value is identical, it would mean a passed authentication.

In a preferred embodiment, the client 110 is used for storing the succeed information. As the client 110 starts next time, if it is detected the succeed information, the local information would not be reported to the updating server 120 for the verification. If the succeed information is stored locally, there is no need to report the local information for the verification of the identification, which reduces the verification process and improves the updating efficiency.

As the client 110 starts next time, if it is not detected the succeed information, the local information is reported to the updating server 120 for the verification. The local information could be the offset of specific position of a file in the client or other information of the client 110. The updating server 120 verifies the local information, and sends configuration information with digital signature to the client 110 after digitalized signature on the configuration information on success verification thereof. Take an example that the local information is the offset of specific position of the file, the updating server 120 calculates an MD5 value on the offset; and calculates an MD5 of an offset of specific position of an existing file on the updating server; and compares the two MD5 values. If the MD5 values are identical, the client 110 would be a valid client, otherwise it is invalid.

The updating server 120 is also used for generating configuration information according to the updating request and for adding a digital signature on the configuration information; and sending the configuration information with the digital signature to the client 110.

The configuration information may include the scope of the original revision, the aiming revision, the size of the updating file, the URL (Universal Resource Locator) address for downloading data for the updating file, description information of the updating data package, Hash verification information (such as MD5 or SHA) of the updating file, etc. Wherein, MD5 means a fifth edition of Message Digest Algorithm, which is a commonly used hash function in the computer security field for providing an integration protection for messages; SHA (Secure Hash Algorithm) is a data encryption algorithm with the national standard FIPS PUB 180-1 published by the United States National Institute of Standards and Technology, which is usually called SHA-1. This algorithm receives a section of plaintext, and irreversibly transforms the plaintext into a section (usually smaller) ciphertext, and further transforms into a shorter outputting sequence with fixed bits, which is the hash values.

The updating server 120 adds the digital signature on the configuration information through encryption the configuration information using a private key. The updating server 120 encrypts the configuration information using the private key to generate an MD5 digest of the configuration information. The updating server 120 sends the MD5 digest to the client 110. The digital signature incorporates asymmetric encryption algorithm, such as RSA algorithm or elliptic curve-based cryptography. The digital signature on the configuration information is for ensuring the genuineness of the source of the configuration information for the client and the integration of the configuration information so as not to be counterfeited.

The client 110 is also used for carrying signature verification on the configuration information, and downloading the updating data package from the updating server 120 after the signature verification is passed, and checking the integration and authenticity of the updating data package.

The client 110 shall decrypt the configuration information through a public key before carrying the signature verification. The client 110 obtains the MD5 digest of the configuration information after the decryption. Meanwhile, the client 110 generates an MD5 digest for the configuration information, and compares the generated MD5 digest with the decrypted MD5 digest through the public key decryption, and determines the configuration information to be valid if the MD5 digests are identical, or otherwise determines the configuration as invalid.

The client 110 downloads from the updating server 120 the updating data package after the signature verification is passed. After the updating data package is downloaded, the updating data package is hash calculated to generate a digest for the updating data package. The generated digest for the updating data package is compared with a digest for the updating data package generated in the updating server 120, and the downloaded updating data package is valid if the digests for the updating data package are identical, or the downloaded updating data package is counterfeited otherwise.

Referring to Fig. 2, according to an embodiment, except for the client 110 and the updating server 120, the system for updating software includes also a statistic server 130 and an updating configuration server 140.

The statistic server 130 is used for receiving results for the downloading of the updating data package that is reported by the client 110, and for generating statistic data accordingly. After the client 110 finishes downloading the updating data package, it is reported to the statistic server 130 the result for this downloading of the updating data package and the result for the installation of this updating data package. The statistic server 130 is used also for synchronizing the statistic data to the updating configuration server 140.

The updating configuration server 140 is used for modifying configuration for an amount of updating according to the statistic data, which means the amount of clients that are allowed for updating. The updating configuration server 140 is used also for providing updating strategy and gamma configuration. The updating strategy include in detail that which revisions to be updated, the amount to be updated, the location, and IP address limiting rules etc. The gamma configuration includes in detail that which clients are valid and which revisions are valid.

Referring to Fig. 3, according to one embodiment, a method for updating software includes steps as follows.

Step S310, a client reporting an updating request and initiating an authentication request.

When updating the client, it is required to report an updating request to the updating server, and the updating server need to verify the authentication of the client which requires the client to initiate an authentication request for requesting the authentication.

Step S320, the client obtaining first verification content from an updating server according to the authentication request; the updating server comparing the first verification content sent from the client with second verification content which is stored in the updating server, and returning succeed information to the client after a passed authentication.

The updating server could compare the first verification content with the second verification content through calculating and comparing an MD5 value thereof, if the MD5 value is identical, it would mean a passed authentication, and the updating server would thereby return the succeed information to the client.

The client gets command scripts from the updating server after the authentication request is initiated. The command scripts are executed to obtain the first verification content. Wherein, the command script is returned from the updating server, which includes definitions of the operations that require the client to execute, for example requiring the client to send an offset of specific position of a file to the updating server, etc. The first verification content could be an offset of a specific position of a file.

Step S330, the updating server generating configuration information according to the updating request, and adding a digital signature on the configuration information before sending the configuration information with the digital signature to the client.

The configuration information may include the scope of the original revision, the aiming revision, the size of the updating file, the URL (Universal Resource Locator) address for downloading data for the updating file, description information of the updating data package, Hash verification information (such as MD5 or SHA) of the updating file, etc.

In a preferred embodiment, the updating server adds the digital signature on the configuration information through encryption the configuration information using a private key. The updating server encrypts the configuration information using the private key to generate an MD5 digest of the configuration information. The updating server sends the MD5 digest to the client. The digital signature incorporates asymmetric encryption algorithm, such as RSA algorithm or elliptic curve-based cryptography. The digital signature on the configuration information is for ensuring the genuineness of the source of the configuration information for the client and the integration of the configuration information so as not to be counterfeited.

Step S340, the client carrying signature verification on the configuration information, and downloading an updating data package from the updating server after the signature verification is passed.

It is included before the signature verification a step that: decrypting the configuration information through a public key. The client obtains an MD5 digest of the configuration information after the decryption. Meanwhile, the client generates an MD5 digest for the configuration information, and compares the generated MD5 digest with the decrypted MD5 digest through the public key decryption, and determines the configuration information to be valid if the MD5 digests are identical, or otherwise determines the configuration as invalid.

The client downloads from the updating server the updating data package after the signature verification is passed. After the updating data package is downloaded, it is still required to verify the integration and validity of the updating data package. The updating data package is hash calculated to generate a digest for the updating data package; while a digest for the updating data package generated in the updating server is obtained as well. The client generated digest for the updating data package is compared with the server generated digest for the updating data package, and the downloaded updating data package is valid if the digests for the updating data package are identical, or the downloaded updating data package is counterfeited otherwise.

In a preferred embodiment, it is included after step S320 a further step of: the client storing the succeed information.

At a start next time, it is detected if the succeed information exists. The client would not report local information for the authentication if the succeed information exists. The client would otherwise report the local information to the updating server if the succeed information does not exist; the updating server verifies the local information, and sends configuration information with digital signature to the client after digitalized signature on the configuration information on success verification thereof; or otherwise ends up if the verification of the local information fails. While the client report the updating request, it is also reported the local information. The local information could be an offset of specific position of a file in the client or other information of the client.

At the start of the client, if the succeed information is stored locally, there is no need to report the local information for the verification of the identification, which reduces the verification process and improves the updating efficiency.

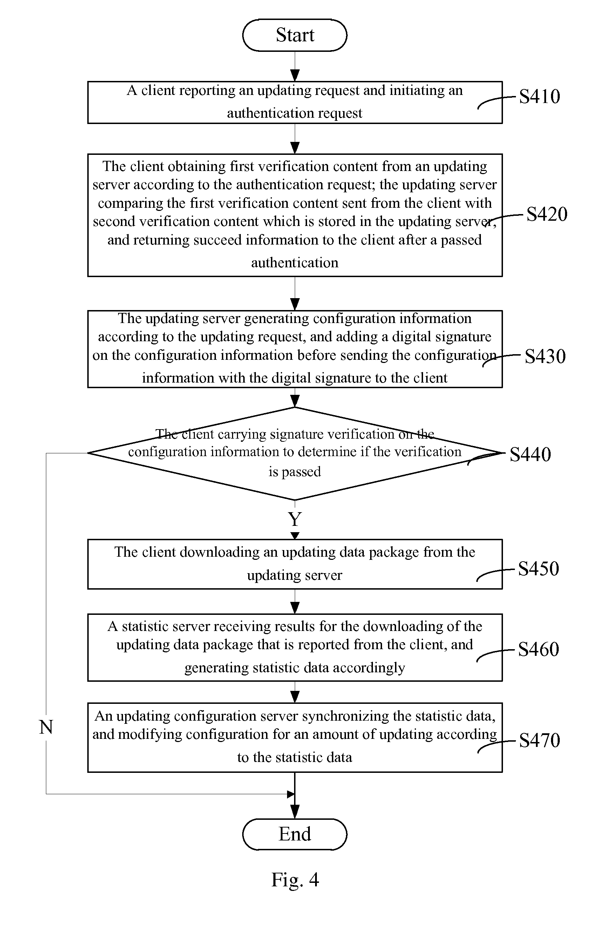

In a preferred embodiment, referring to Fig. 4, a method for updating software includes steps as follows.

Step S410, a client reporting an updating request and initiating an authentication request.

Step S420, the client obtaining first verification content from an updating server according to the authentication request; the updating server comparing the first verification content sent from the client with second verification content which is stored in the updating server, and returning succeed information to the client after a passed authentication.

Step S430, the updating server generating configuration information according to the updating request, and adding a digital signature on the configuration information before sending the configuration information with the digital signature to the client.

The process that the updating server generates the configuration information and adds the digital signature on the configuration information is similar to the description above and would not be described herein.

Step S440, the client carrying signature verification on the configuration information to determine if the verification is passed, step S450 is followed if it is passed, or end if it is not passed.

Step S450, the client downloading an updating data package from the updating server.

Detailed information of steps S410 to S450 would be similar to the above steps S310 to S340, and would not be described herein.

Step S460, a statistic server receiving results for the downloading of the updating data package that is reported from the client, and generating statistic data accordingly.

After the client finishes downloading the updating data package, it is reported to the statistic server the result for this downloading of the updating data package and the result for the installation of this updating data package. The statistic server generates the statistic data according to the reported results.

Step S470, an updating configuration server synchronizing the statistic data, and modifying configuration for an amount of updating according to the statistic data.

The statistic server is used also for synchronizing the statistic data to the updating configuration server. The updating configuration server is used for modifying configuration for an amount of updating according to the statistic data, which means the amount of clients that are allowed for updating. The updating configuration server is used also for providing updating strategy and gamma configuration. The updating strategy include in detail that which revisions to be updated, the amount to be updated, the location, and IP address limiting rules etc. The gamma configuration includes in detail that which clients are valid and which revisions are valid.

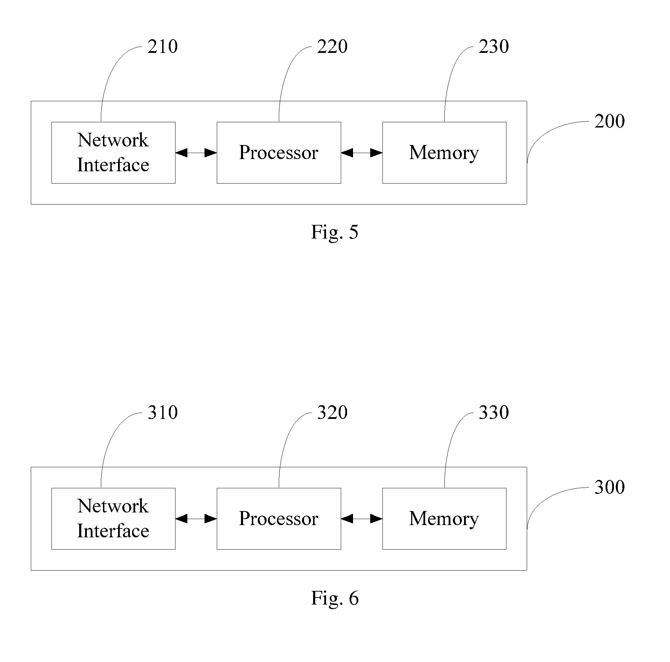

Referring to Fig. 5, according to an embodiment, a server 200 includes a network interface 210, a processor 220, and a memory 230. The network interface 210 is used for communicating with clients that request for updating, and obtaining updating requests and authentication requests. The processor 220 communicates with the network interface 210. The memory 230 communicates with the processor, and is used for storing data and machine instructions. The processor 220 calls the machine instructions for performing multiple operations. The operations include as follows.

Generating configuration information according to the updating request; sending to the client first verification content according to the authentication request, and comparing the first verification content with stored second verification content for authentication, and return succeed information to the client after a passed authentication. The operation is similar to the process of step S320 of the above method for updating software, and would not be described herein.

Adding a digital signature on the configuration information before sending the configuration information with the digital signature to the client; after the client carrying signature verification on the configuration information the signature verification is passed, providing the client with updating data package. The operation is the same as the process of steps S330 and S340 as the above method for updating software, and would not be described herein.

According to one embodiment, the multiple operations include also as follows.

Receiving results for the downloading of the updating data package that is reported from the client, and generating statistic data accordingly.

Synchronizing the statistic data, and modifying configuration for an amount of updating according to the statistic data.

The above two operations are the same as the process of steps S460 and S470 of the above method for updating software, and would not be described herein.

Referring to Fig. 6, a client 300 includes a network interface 310, a processor 320 and a memory 330. The network interface 310 is used for providing communication with an updating server, and reporting an updating request to the updating server, and initiating an authentication request. The processor 320 communicates with the network interface 310. The memory 330 communicates with the processor 320, and is used for storing data and machine instructions. The processor 320 calls the machine instructions for performing multiple operations. The operations include as follows.

Obtaining first verification content from an updating server according to the authentication request; obtaining succeed information after an authentication through comparison between the first verification content and second verification content which is stored in the server is passed. The operation is the same as the process of step S320 of the above method for updating software, and would not be described herein.

Obtaining configuration information that the server generates and adds digital signature according to the updating request, and carrying signature verification on the configuration information and downloading an updating data package from the updating server after the signature verification is passed. The operation is the same as the process of steps S330 and S340 of the above method for updating software, and would not be described herein.

In an embodiment, the multiple operations include also as follows.

Storing the succeed information, at a start next time, local information is not reported to the server for authentication if the succeed information exists, or the local information is reported to the server if the succeed information does not exist.

According to the above system and method for updating software, the server and client, the client initiates an authentication request and obtaining first verification content according to the authentication request; the updating server compare the first verification content with the stored second verification content, and returns succeed information to the client after the authentication is passed; which enables the server to perform identification on the identity of the client. The updating server generates the configuration information according to the updating request, and adds digital signature on the configuration information to be distributed to the client. The client carries signature verification on the configuration information and downloads the updating data package after the verification is passed, which ensures the configuration information of the updating server to be valid, and enables the client to perform identification on the identity of the server. Through the bidirectional identification, the security of the software updating is improved.

Besides, the client initiates the authentication request to get command scripts; executes the command scripts to generate the first verification content; the updating server compares the first verification content with the second verification content to return succeed information to the client after the passed authentication, and stores the succeed information on the client so that at a start next time, if the succeed information is detected to exist, it is not needed to send the local information for the authentication, which reduces the verification process and improves the updating efficiency.

The above described embodiments explain only several exemplary embodiments of the present disclosure which are rather detailed and could not be understood as for limiting the scope of claims of the present disclosure. It shall be mentioned that for those skilled in the art, alternative embodiments could be made to which the present disclosure pertains without departing from its spirit and scope, wherein the alternative embodiments shall be defined as within the claim of the current disclosure.

## Claims

1. A system for updating software comprising a client and an updating server, the client is used for reporting an updating request to the updating server, the updating server is used for generating configuration information according to the updating request; wherein the client is further used for initiating an authentication request and obtaining first verification content from the updating server; the updating server is used for comparing the first verification content with second verification content that is stored in the updating server for the authentication and returning succeed information to the client after a passed authentication; the updating server is further used for adding a digital signature on the configuration information; and sending the configuration information with the digital signature to the client; the client is further used for carrying signature verification on the configuration information, and downloading an updating data package from the updating server.

2. The system for updating software according to claim 1, wherein the client is further used for getting command scripts from the updating server after the authentication request is initiated, and executing the command scripts to obtain the first verification content.

3. The system for updating software according to claim 1, wherein the client is further used for storing the returned succeed information, and not reporting local information to the updating server for the authentication if the succeed information is detected to exist at a start next time; or reporting the local information to the updating server if the succeed information is detected not to exist; the updating server is used for verifying the local information, and for sending configuration information with digital signature to the client after adding digital signature on the configuration information at a success verification thereof.

4. The system for updating software according to claim 1, wherein the system further comprises a statistic server and an updating configuration server; the statistic server is used for receiving results for the downloading of the updating data package that is reported by the client, and for generating statistic data accordingly; the updating configuration server is used for synchronizing the statistic data of the statistic server, and modifying configuration for an amount of updating according to the statistic data.

5. The system for updating software according to claim 1, wherein the updating server adds the digital signature on the configuration information through encryption the configuration information using a private key; the client decrypts the configuration information through a public key before carrying the signature verification.

6. A method for updating software comprising:
a client reporting an updating request and initiating an authentication request;
the client obtaining first verification content from an updating server according to the authentication request; the updating server comparing the first verification content sent from the client with second verification content which is stored in the updating server, and returning succeed information to the client after a passed authentication;
the updating server generating configuration information according to the updating request, and adding a digital signature on the configuration information before sending the configuration information with the digital signature to the client;
the client carrying signature verification on the configuration information, and downloading an updating data package from the updating server after the signature verification is passed.

7. The method for updating software according to claim 6, wherein the method further comprises:
the client getting command scripts from the updating server after the authentication request is initiated; the client executing the command scripts to obtain the first verification content.

8. The method for updating software according to claim 6, wherein the method further comprises: the client storing the succeed information;
at a start next time, detecting whether the succeed information exists; the client not reporting local information for the authentication if the succeed information exists; or the client reporting the local information to the updating server if the succeed information does not exist; the updating server verifying the local information, and sending configuration information with digital signature to the client after adding digital signature on the configuration information on a success verification thereof; or otherwise ends up if the verification of the local information fails.

9. The method for updating software according to claim 6, wherein the method further comprises:
a statistic server receiving results for the downloading of the updating data package that is reported from the client, and generating statistic data accordingly;
an updating configuration server synchronizing the statistic data, and modifying configuration for an amount of updating according to the statistic data.

10. The method for updating software according to claim 6, wherein the step of adding digital signature on the configuration information is that the updating server adds the digital signature on the configuration information through encryption the configuration information using a private key; wherein before the signature verification comprises: decrypting the configuration information through a public key.

11. A server, wherein the server comprises:
a network interface for communicating with clients that request for updating, and obtaining updating requests and authentication requests that are reported from the clients;
a processor for communicating with the network interface; and
a memory for communicating with the process and storing data and machine instructions; the processor is for calling the machine instructions for performing multiple operations; the multiple operations comprise:
generating configuration information according to the updating request; sending to the client first verification content according to the authentication request, and comparing the first verification content with stored second verification content for authentication, and return succeed information to the client after a passed authentication;
adding a digital signature on the configuration information before sending the configuration information with the digital signature to the client; after the client carrying signature verification on the configuration information the signature verification is passed, providing the client with updating data package.

12. The server according to claim 11, wherein the multiple operations further comprise:
verifying the local information, and for sending configuration information with digital signature to the client after adding digital signature on the configuration information at a success verification thereof.

13. The server according to claim 11, wherein the multiple operations further comprise:
receiving results for the downloading of the updating data package that is reported by the client, and generating statistic data accordingly;
synchronizing the statistic data, and modifying configuration for an amount of updating according to the statistic data.

14. The server according to claim 11, wherein adding digital signature on the configuration information is that adding the digital signature on the configuration information through encryption the configuration information using a private key.

15. A client, wherein the client comprises:
a network interface for providing communication with an updating server, and reporting an updating request to the updating server, and initiating an authentication request;
a processor for communicating with the network interface; and
a memory for communicating with the process, and for storing data and machine instructions, the processor is for calling the machine instructions for performing multiple operations; the multiple operations comprise:
obtaining first verification content from the updating server according to the authentication request; obtaining succeed information after an authentication through comparison between the first verification content and second verification content which is stored in the server is passed;
obtaining configuration information that the server generates and adds digital signature according to the updating request, and carrying signature verification on the configuration information and downloading an updating data package from the updating server after the signature verification is passed.

16. The client according to claim 15, wherein the multiple operations further comprise:
getting command scripts from the updating server after the authentication request is initiated, and executing the command scripts to obtain the first verification content.

17. The client according to claim 15, wherein the multiple operations further comprise:
storing the succeed information; at a start next time, not reporting local information to the server for authentication if the succeed information exists, or reporting the local information to the server if the succeed information does not exist.

18. The client according to claim 15, wherein the multiple operations further comprise:
decrypting the configuration information through a public key before carrying the signature verification.
